# EUROPÄISCHE PATENTANMELDUNG

(11) **EP 4 807 597 A1**
(43) Veröffentlichungstag der Anmeldung: **16.09.2026**
(21) Anmeldenummer: 25163800.3
(22) Anmeldetag: 14.03.2025
(51) Int. Cl.: G06F 21/55, G06F 21/57, G06F 21/74

(54) **AUSFÜHREN EINER SICHERHEITSMASSNAHME BASIEREND AUF EINEM VERTRAUENSWÜRDIGKEITSSTATUS EINES GERÄTS**

(71) Anmelder: Siemens Aktiengesellschaft, 80333 München (DE)
(72) Erfinder: Falk, Rainer, 85435 Erding (DE)
(74) Vertreter: Siemens Patent Attorneys

(57) **Zusammenfassung**

Die Erfindung betrifft ein Verfahren zum Ausführen einer Sicherheitsmaßnahme basierend auf einem Vertrauenswürdigkeitsstatus (CTI) eines Geräts (D),
mit den Schritten:
- Heranziehen einer Information (D6) zu einem sicherheitsrelevanten Ereignisses auf dem Gerät (D),
- Heranziehen einer Information (CUE) zu einer vorangegangenen Verwendung von sensiblen Konfigurationsdaten (AF, SF, D5) auf dem Gerät (D),
- Ermitteln des Vertrauenswürdigkeitsstatus (CTI) aus der Information zu dem sicherheitsrelevanten Ereignisses (RM) in Kombination mit der Information (CUE) zu der vorangegangenen Verwendung der sensiblen Konfigurationsdaten (AF, SF, D5),
- Ableiten der Sicherheitsmaßnahme von dem Vertrauenswürdigkeitsstatus (CTI) und
- Ausführen der Sicherheitsmaßnahme.

Außerdem betrifft die Erfindung ein Computerprogrammprodukt, ein computerlesbares Medium, eine Überwachungseinheit, ein Gerät und ein System.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die Erfindung betrifft ein Verfahren zum Ausführen einer Sicherheitsmaßnahme basierend auf einem Vertrauenswürdigkeitsstatus eines Geräts. Außerdem betrifft die Erfindung ein Computerprogrammprodukt, ein computerlesbares Medium, eine Überwachungseinheit, ein Gerät und ein System.

### Beschreibung des Stands der Technik

Ein Gerät, z.B. ein loT-Gerät und/oder ein industrielles Steuergerät, kann Schwachstellen aufweisen, die von einem Angreifer ausgenutzt werden können. Mit dem Ziel "Device Cyberresilience" wird an technischen Lösungen gearbeitet, um eine Manipulation von Geräten verlässlich erkennen zu können, um sie trotz Manipulation zumindest eingeschränkt weiterbetreiben zu können, und um sie schnell und verlässlich wieder in einen integren Zustand zurückzuversetzen.

Es ist bekannt, Schlüssel bei einer erkannten Manipulation zu löschen (Tamper Respondence, Zeroization) und den Zugriff auf sensible Schlüssel während einem aktivierten Resiliencebetriebsmodus einzuschränken.

Allgemein ist Logging bekannt. Dabei kann grundsätzlich auch geloggt werden, welche Credentials/Schlüssel verwendet werden. Es sind manipulationsgeschützte Logsysteme (Blackbox Recorder, Juridical Recorder) bekannt, um die Ereignisse, die zu einem Unfall geführt haben, nachträglich aufklären zu können (z.B. in Flugzeugen, PKW, Schienenfahrzeugen, Stellwerken).

Von Venafi ist ein SSH Key Manager bekannt, der die in einer Umgebung verwendeten SSH-Keys überwacht und gegenüber einem Schlüsselverzeichnis prüft.

Die Publikation NIST SP 800-193 "Platform Firmware Resiliency Guidelines" beschreibt Grundfunktionen für resiliente Computer-Systeme (Root of Trust for Update, Root of Trust for Detection, Root of Trust for Recovery). Abschnitt 4.4 beschreibt das Wiederherstellen der Platform-Firmware und von kritischen Konfigurationsdaten. Dabei wird auch die Integrität der Firmware und der Konfigurationsdaten betrachtet. Bezüglich Konfigurationsdaten ist vorgesehen, dass diese auf einen Factory-Default-Wert (reset to factory defaults) oder einen gespeicherten Wert (recover to a last known good state) gesetzt werden können (Abschnitt 4.4.2).

Die CRA-Regulierung (CRA: Cyber Resilience Act) definiert in Annex I grundlegende Cybersicherheits-Anforderungen, einschließlich Unterpunkt 1.2.h "die Verfügbarkeit wesentlicher und grundlegender Funktionen, auch nach einem Sicherheitsvorfall, einschließlich über Abwehr- und Eindämmungsmaßnahmen gegen Überlastungsangriffe auf Server (Denial-of-Service-Angriffe), sicherstellen" ("protect the availability of essential and basic functions, also after an incident, including through resilience and mitigation measures against denial-of-service attacks ") und Unterpunkt I.2.i "die negativen Auswirkungen von den Produkten selbst oder von vernetzten Geräten auf die Verfügbarkeit der von anderen Geräten oder Netzen bereitgestellten Dienste minimieren" ("minimise the negative impact by the products themselves or connected devices on the availability of services provided by other devices or networks"). Es ist dadurch gefordert, dass essenzielle und grundlegende Funktionen verlässlich aufrechterhalten werden und dass negative Auswirkungen auf Andere vermieden werden, d.h. auch bei und nach einem Angriff.

Die Aufgabe der Erfindung besteht darin, eine Lösung für eine sicherere Wiederinbetriebnahme eines Geräts nach einem Angriff auf das Gerät bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Ausführen einer Sicherheitsmaßnahme basierend auf einem Vertrauenswürdigkeitsstatus eines Geräts,
mit den Schritten:
- Heranziehen (Empfangen, Abrufen) einer Information zu einem sicherheitsrelevanten Ereignis auf dem Gerät,
- Heranziehen (Empfangen, Abrufen) einer Information zu einer vorangegangenen Verwendung (d.h. Logging und/oder Recording zur früheren Verwendung) von sensiblen Konfigurationsdaten auf dem Gerät (durch einen auf dem Gerät ausgeführten Programmcode (Anwendungscode, OS)),
- Ermitteln des Vertrauenswürdigkeitsstatus aus der Information zu dem sicherheitsrelevanten Ereignisses in Kombination mit der Information zu der vorangegangenen Verwendung der sensiblen Konfigurationsdaten,
- Optional: Bereitstellen des Vertrauenswürdigkeitsstatus (optional nach extern),
- Ableiten einer Sicherheitsmaßnahme aus dem Vertrauenswürdigkeitsstatus und
- Ausführen der Sicherheitsmaßnahme.

Wenn ein als manipuliert erkanntes Gerät weiterbetrieben wird, können dabei kryptographische Berechnungen unter Nutzung der vorliegenden kryptographischer Schlüssel verwendet werden. Dadurch entsteht die Bedrohung, dass diese Schlüssel bei der Nutzung auf einem manipulierten Gerät kompromittiert werden. Dadurch entsteht weiterhin die Bedrohung, dass durch diese Schlüssel geschützte Daten bei der Nutzung auf einem manipulierten Gerät kompromittiert werden.

Ein cyberresilientes Gerät kann einen eingeschränkten Betriebsmodus (Resilience-Betriebsmodus), der auch als "degraded Mode" bezeichnet werden kann, aktivieren, wenn eine tatsächliche oder potenzielle Integritätsverletzung erkannt wurde. Die Integritätsverletzung kann insbesondere eine Geräteintegritätsverletzung sein, beispielsweise eine, bei der ausgeführter Programmcode und/oder verwendete Gerätekonfigurationsdaten bei Benutzung des Geräts bei einem Angriff manipuliert werden, insbesondere durch Ausnutzen einer Schwachstelle (Vulnerability) oder durch einen Fehlerangriff, z.B. durch einen von einem Angreifer dem Gerät eingeprägten Spannungspuls, elektromagnetischem Feld oder optischen oder radioaktiven Strahlung. Das Erkennen einer Integritätsverletzung kann prinzipiell erst nachträglich erfolgen, d.h. nachdem die Manipulation bereits erfolgt ist. Bei dem zurückliegend erfolgten Angriff auf die Geräteintegrität kann auf sensible Konfigurationsdaten wie private oder geheime Schlüssel missbräuchlich zugegriffen worden sein, d.h. bevor der Resilience-Betriebsmodus aktiviert worden ist. Sensible Konfigurationsdaten wie private oder geheime Schlüssel können daher bereits kompromittiert sein, wenn der Resilience-Betriebsmodus aktiviert wird. Weiterhin kann es aus funktionalen Gründen in diesem möglicherweise kompromittierten Betriebsmodus notwendig sein, auf sensible Konfigurationsdaten zuzugreifen, um die Nutzung zumindest essenzieller Funktionen oder von Basisfunktionen auch im Resilience-Betriebsmodus zu ermöglichen.

Nach einer Ausführungsform wird als Lösung der zuvor beschriebenen Herausforderungen vorgeschlagen, dass auf einem Gerät durch eine Trust-Anchor-Schnittstelle eine geschützte Erfassung erfolgt, auf welche sensiblen Konfigurationsdaten, der auf einem Prozessor des Geräts ausgeführte Programmcode (Anwendungscode, OS) zugreift. Dies kann als "Blackbox-Recorder" für den Zugriff auf sensible Konfigurationsdaten verstanden werden. Die sensiblen Konfigurationsdaten können insbesondere Credentials wie kryptographische Schlüssel, Root-Zertifikate und Referenz-Hash-Werte für Integritätsprüfungen sein. Eine Trust-Anchor-Schnittstelle kann auf dem gerät ausgeführtem Programmcode den Zugriff auf einen Trust-Anchor-Sicherheitselement, z.B. ein Crypto-Controller, ein Security-Prozessorbaustein, ein Trusted Platform Module bereitstellen. Ein solches Trust-Anchor-Sicherheitselement kann beispielsweise kryptographische Schlüssel speichern und Basis-Kryptographie-Operationen bereitstellen (z.B. Verschlüsseln, Entschlüsseln, Erstellen einer kryptographischen Prüfsumme, Prüfen einer kryptographischen Prüfsumme, Bereitstellen einer kryptographisch starken Zufallszahl, Schlüsselgenerierung, Schlüsselableitung).

Dies hat den Vorteil, dass ein Weiterbetrieb oder Recovery eines manipulierten Geräts mit erhöhter Vertrauenswürdigkeit erfolgen kann, da verlässlich ermittelbar ist, ob beziehungsweise welche Credentials während der angenommenen Angriffsphase benutzt wurden und daher möglicherweise kompromittiert sein könnten. Ein Credential kann dabei ein kryptographischer Schlüssel (geheimer Schlüssel für ein symmetrisches Kryptoverfahren, privater Schlüssel für eine asymmetrisches Kryptoverfahren, öffentlicher Schlüssel für ein asymmetrisches Kryptoverfahren), ein Authentisierungs-Token, ein digitales Zertifikat, ein verifiable Credential oder eine Passwortprüfinformation sein.

Nach einer Ausführungsform wird die Information zu der vorangegangenen Verwendung (d.h. Logging und/oder Recording zur früheren Verwendung und/oder erfolgter Zugriffe) der sensiblen Konfigurationsdaten auf dem Gerät insbesondere durch das Gerät insbesondere bei einem Startvorgang (Secure Boot) des Geräts ermittelt. Dies kann insbesondere vorteilhaft sein, wenn bei erkannter Verletzung der Geräteintegrität ein Geräteneustart (Reboot) erfolgt, bei dem ein Resilience-Betriebsmodus-Firmware-Image gestartet wird, oder wenn als Resilience-Reaktion ein Geräte-Neustart (Reboot) aus einem in einem Flash-Speicher zugriffsgeschützt gespeicherten Boot-Image erfolgt.

Zusammengefasst bietet die Erfindung den Vorteil, dass Schlüssel und andere sicherheitskritische Konfigurationsdaten auf einem Gerät geschützt werden, während das Gerät in einem manipulierten Zustand weiterbetrieben werden kann.

In einer Weiterbildung der Erfindung umfasst das sicherheitsrelevanten Ereignis:
- Eine (tatsächliche, d.h. ein stattgefundene) Integritätsverletzung und/oder
- eine potenzielle Integritätsverletzung und/oder
- eine Manipulation und/oder
- ein zurückliegend erfolgter Angriff und/oder
- eine Kompromittierung.

In einer weiteren Weiterbildung der Erfindung umfassen die sensiblen Konfigurationsdaten:
- einen privaten Schlüssel und/oder
- einen geheimen Schlüssel und/oder
- einen öffentlichen Schlüssel und/oder
- ein Credential und/oder
- ein verifiable Credential und/oder eine verifiable Presentation,
- einen kryptographischen Schlüssel und/oder
- ein Root-Zertifikat und/oder
- einen Referenz-Hash-Wert und/oder
- einen Wert für eine Integritätsprüfungen und/oder
- einen Firmware-Signatur-Prüfschlüssel (für einen Secure Boot und/oder ein Firmware-Update) und/oder
- ein Root-Zertifikat zur Validierung einer Firmware-Signatur (für einen Secure Boot und/oder ein Firmware-Update) und/oder
- einen kryptographischen Schlüssel zum Entschlüsseln einer Geräte-Firmware,
- einen kryptographischen Schlüssel zum Entschlüsseln oder zum Integritätsschutz von Konfigurationsdaten und/oder
- ein Root Certificate zur Authentisierung eines Kommuniaktionspartners und/oder
- ein initiales Gerätezertifikat (IDevID) und/oder
- einen Geräteauthentisierungsschlüssel für ein automatisiertes Provisionieren (insbesondere ein für Zero-Touch Onboarding) und/oder
- eine Passwort-Datenbank (z.B. für lokalen oder Remote-Zugriff auf Verwaltungsfunktionen, für Aktivierung einer Schutzstufe).

In einer weiteren Weiterbildung der Erfindung wurde das Gerät basierend auf dem sicherheitsrelevanten Ereignis in einen eingeschränkten Betriebsmodus (geschützten Betriebsmodus und/oder Resilience-Betriebsmodus und/oder Recovery-Betriebsmodus) gesetzt.

Weiterhin weist das Gerät eine Integritätsüberwachungseinheit (Device Runtime Health Check, Device Runtime Integrity Check) auf, die bei einer Geräteintegritätsverletzung einen Resilience-Betriebsmodus (eingeschränkter Betriebsmodus, Recovery-Betriebsmodus) aktiviert oder zu einer Aktivierung führt. Ein Aktivieren eines Recovery-Betriebsmodus dient als Trigger, dass der Credential Trust Monitor aktiv wird und erfindungsgemäßes Verfahren ausgeführt wird.

Falls die minimal für ein Recovery oder einen eingeschränkten Weiterbetrieb erforderlichen sensiblen Konfigurationsdaten nicht vertrauenswürdig vorliegen, kann stattdessen ein Fehler-Betriebsmodus aktiviert werden (z.B. ein Fail-Safe-Betriebsmodus).

In einer weiteren Weiterbildung der Erfindung hat die vorangegangene Verwendung innerhalb eines definierten Zeitfensters (auch "Zeitraum") stattgefunden. Das definierten Zeitfensters (auch "Zeitraum") kann fest vorgegeben oder vorgebbar, beispielsweise konfigurierbar, sein.

Bei aktiviertem Resilience-Betriebsmodus liegt somit eine verlässliche Information vor, auf welche sensiblen Konfigurationsdaten in einem zurückliegenden Zeitfenster tatsächlich zugegriffen wurde (lesend, schreibend, etc.), beziehungsweise konkret, welche kryptographischen Credentials in dem zurückliegenden Zeitfenster benutzt wurden.

In einer weiteren Weiterbildung der Erfindung enthält das definierte Zeitfenster einen geschätzten Zeitpunkt, zu welchem das sicherheitsrelevante Ereignis stattgefunden hat.

Das Zeitfenster stellt somit eine Schätzung dar zu dem Zeitraum, in dem das sicherheitsrelevante Ereignis, insbesondere die Verletzung der Geräteintegrität und/oder die Manipulation, tatsächlich erfolgt ist oder erfolgt sein könnte. Die Schätzung ist von Vorteil, da der genaue Zeitpunkt der erfolgten Manipulation ggf. unbekannt ist. Das Zeitfenster umfasst insbesondere einen Zeitraum von 1 Minute, 1h, 1 Tag und/oder 1 Woche.

Das Zeitfenster liegt somit um den geschätzten Zeitpunkt und hat den Vorteil, dass die Sicherheit erhöht wird, wenn eine Abweichung zwischen dem geschätzten Zeitpunkt und dem Zeitpunkt, zu dem das sicherheitsrelevante Ereignis tatsächlich stattgefunden hat, vorliegt. Die Sicherheit wird erhöht, da so Information zu einer vorangegangenen Verwendung (d.h. Logging und/oder Recording zur früheren Verwendung) von sensiblen Konfigurationsdaten auf dem Gerät über einen längeren Zeitraum berücksichtigt werden, als wenn nur der Zeitraum vom geschätzten Zeitpunkt bis zum Aktivieren des Resilience-Betriebsmodus betrachtet werden würde.

In einer weiteren Weiterbildung der Erfindung endet das definierte Zeitfenster mit dem Zeitpunkt, zu dem der eingeschränkten Betriebsmodus aktiviert wurde.

Das zurückliegende Zeitfenster bezieht sich somit insbesondere auf den Zeitraum zwischen dem Zeitpunkt, zu dem die Verletzung der Geräteintegrität erkannt wurde und dem Zeitpunkt, zu dem der Resilience-Betriebsmodus auf dem Gerät aktiviert wurde, oder zu dem das Aktivieren des Resilience-Betriebsmodus auf dem Gerät angestoßen wurde.

In einer weiteren Weiterbildung der Erfindung ist das Zeitfenster:
- fest vorgegeben und/oder
- durch eine Nutzereigabe konfigurierbar und/oder
- wird (automatisch) abhängig von einer Art des sicherheitsrelevanten Ereignisses ermittelt.

In einer weiteren Weiterbildung der Erfindung umfasst die Sicherheitsmaßnahme:
- Ein Löschen der sensiblen Konfigurationsdaten und/oder
- Ein Sperren der sensiblen Konfigurationsdaten und/oder
- ein Ersetzen der sensiblen Konfigurationsdaten durch sensible Ersatzkonfigurationsdaten.

Dies hat den Vorteil, dass ein vollständiges Wiederaufsetzen des Geräts aus einem Default-Zustand, insbesondere aus einem Factory-Default-Zustand, nur dann erfolgen muss, wenn es tatsächlich notwendig ist und ein Löschen der sensiblen Konfigurationsdaten und/oder Ersetzen der sensiblen Konfigurationsdaten durch sensible Ersatzkonfigurationsdaten nicht genügt. Dadurch ist das Recovery schneller durchführbar.

In einer weiteren Weiterbildung der Erfindung wird die Sicherheitsmaßnahme in Abhängigkeit der Information zu der vorangegangenen Verwendung (d.h. Logging und/oder Recording zur früheren Verwendung) der sensiblen Konfigurationsdaten auf dem Gerät (durch einen auf dem Gerät ausgeführten Programmcode (Anwendungscode, OS)) ausgeführt.

Es erfolgt somit ein Löschen oder Sperren der sensiblen Konfigurationsdaten, welche die Information zu der vorangegangenen Verwendung betrifft und/oder ein Ersetzen der sensiblen Konfigurationsdaten, welche die Information zu der vorangegangenen Verwendung betrifft, durch sensible Ersatzkonfigurationsdaten.

Abhängig davon, auf welche sensiblen Konfigurationsdaten zurückliegend zugegriffen wurde, wird insbesondere beim Resilience-Betriebsmodus (Recovery-Betriebsmodus) ein Vertrauensstatus der sensiblen Konfigurationsdaten (Credential) ermittelt und davon abhängig wird der Zugriff auf diese gesperrt bzw. sie werden gelöscht oder durch Ersatzwerte substituiert. Dadurch wird erreicht, dass sensible Konfigurationsdaten, die nicht mehr vertrauenswürdig sind, nicht mehr weiterbenutzt werden können. Sensible Konfigurationsdaten, auf die während des Zeitfensters nicht zugegriffen wurde, sind jedoch weiterhin nutzbar.

Bei oder nach erfolgtem Recovery können weiterhin abhängig von dem ermittelten Vertrauensstatus der sensiblen Konfigurationsdaten die erforderlichen Credential-Management-Operationen ermittelt und angestoßen oder durchgeführt werden (z.B. Revozierung eines Authentisierungscredentials oder konkret eines digitalen Zertifikats anfordern, ein Schlüssel-Update durchführen, eine Zertifikatsaktualisierung anstoßen). Diese Aktionen können lokal auf dem Gerät erfolgen. Es ist auch möglich, dass das Gerät eine Information zu dem Vertrauensstatus der sensiblen Konfigurationsdaten bereitstellt, z.B. einem Gerätemanagementsystem oder einem speziellen Recovery-System. Vorzugsweise wird die Information zu dem Vertrauensstatus der sensiblen Konfigurationsdaten in Form einer kryptographisch geschützten Attestierung dem externen System bereitgestellt, sodass das externe System die erforderlichen Maßnahmen ermitteln und anstoßen oder durchführen kann.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem eine Überwachungseinheit zum Überwachen einer Vertrauenswürdigkeit von sensiblen Konfigurationsdaten (insbesondere ein Credential Trust Monitor) aufweisend:
- ein erfindungsgemäßes Computerprogrammprodukt und/oder
- ein erfindungsgemäßes computerlesbares Medium.

Die Erfindung umfasst außerdem ein Gerät aufweisend:
- eine erfindungsgemäße Überwachungseinheit
   und
- eine Geräte-Resilienzmanagement-Einheit (Device Resilience Management Engine) und/oder
- eine Trust-Anchor-Schnittstelle und/oder
- eine Laufzeitumgebung und/oder
- einen Schlüsselspeicher und/oder
- eine Speichereinheit für kryptographische Funktionen.

Die Erfindung umfasst außerdem ein System, aufweisend:
- ein erfindungsgemäßes Gerät
   und
- ein Netzwerk und/oder
- ein lokales (Fabrik-) Netzwerk und/oder
- eine öffentliches Netzwerk und/oder
- einen Geräteverwaltung (Device Manager) und/oder
- ein (Cloud-) Backend.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung eines ersten erfindungsgemäßen Systems und
- Fig. 2: eine schematische Darstellung eines zweiten erfindungsgemäßen Systems.

### DETAILLIERTE BESCHREIBUNG DER ERFINDUNG

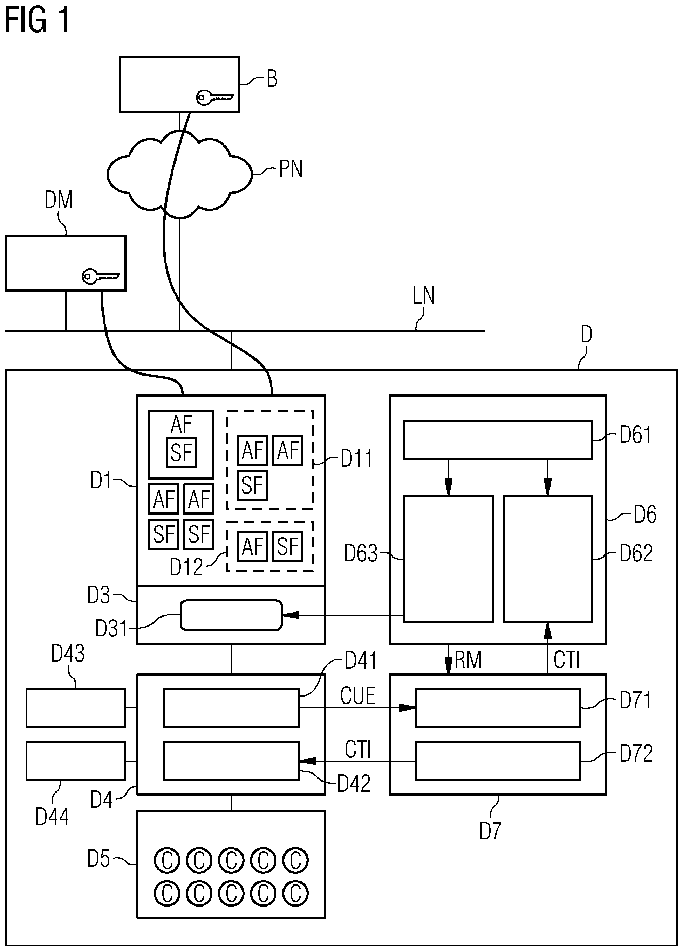

Fig. 1 zeigt ein loT-Gerät D mit einer Laufzeitumgebung D1 (RTE, Runtime Environment), in dem mehrere Anwenderfunktionen AF und Sicherheitsfunktionen SF ausgeführt werden. Beispielsweise können manche dieser Funktionen mit anderen Systemen kommunizieren (über ein öffentliches Netzwerk PN oder ein lokales Netzwerk LN, z.B. mit einem lokalen Gerätemanagementsystem DM (Device Manager DM) oder mit einem Cloud-loT-Backend B. Eine Anwenderfunktionen AF kann insbesondere eine Automatisierungsfunktion sein, insbesondere eine Steuerungsfunktion oder Überwachungsfunktion zur Steuerung beziehungsweise Überwachung eines technischen Systems wie beispielsweise einer Werkzeugmaschine, einer CNC-Fräsmaschine, eines Roboters, eines 3D-Druckers, eines Transportsystems, einer Klimatisierung, oder eines verfahrenstechnischen oder chemischen Reaktors. Eine Anwenderfunktion kann dabei über eine (nicht in Fig. dargestellte) Ein-Ausgabe-Schnittstelleneinrichtung (I/O-Modul, IO: Input/Output) auf Sensoren und/oder Aktoren zugreifen.

Die Kommunikationsverbindung ist dabei kryptographisch geschützt (authentisiert, verschlüsselt). Außerdem können z.B. lokale Projektierungsdaten oder Datenspeicher verschlüsselt sein. Manche der Funktionen AF, SF sind essenzielle Funktionen D11 oder Basisfunktionen D12. Der Scheduler D3 führt die aktivierten Funktionen D31 aus.

Auf dem Gerät D ist eine Geräteresilience-Managementeinheit D6 vorgesehen. Außerdem ist ein Schlüsselspeicher D5 (key store D5) vorgesehen mit mehreren Credentials C, sowie eine Hardware Crypto Engine D43 und eine Software Crypto Engine D44, die kryptographische Operationen implementieren.

Die Geräte-Resilienzmanagement-Einheit D6 (Device Resilience Management Engine D6) enthält ein Geräteintegritätsüberwachungssystem D61 (Runtime Health Check D61), das die Integrität des loT-Geräts D, insbesondere der Laufzeitumgebung D1 (Runtime Enviornment D1) und der ausgeführten Anwenderfunktionen AF und Sicherheitsfunktionen SF, überwacht. Die Geräte-Resilienzmanagement-Einheit D6 aktiviert bei erkannter Verletzung der Geräteintegrität einen Resilience-Betriebsmodus, indem eine Menge der aktivierten Funktionen AF, SF angepasst ist, insbesondere eingeschränkt auf Basisfunktionen D12 (z.B. Remote Access, Firmware Update) und essenzielle Funktionen D11 (z.B. Basissteuerungsfunktion eines technischen Systems, Notbetriebssteuerungsfunktion). Die Menge der aktivierten Funktionen AF, SF wird von der Activated Function Determination Einheit D63 der Geräte-Resilienzmanagement-Einheit D6 ermittelt und dem Scheduler D3 der Ausführungsumgebung D1 bereitgestellt. Vom Scheduler D3 werden nur diese zur Ausführung freigegebenen Anwendungsfunktionen AF und Sicherheitsfunktionen SF zur Ausführung gebracht.

Anwenderfunktionen AF und Sicherheitsfunktionen SF greifen über eine Trust-Anchor-Schnittstelle D4 auf den Schlüsselspeicher D5 und/oder kryptographische Funktionen D5 zu, z.B. zum Authentisieren, zum Verschlüsseln, zum Entschlüsseln von Daten, zur Schlüsselgenerierung.

Die Trust-Anchor-Schnittstelle D4 ermittelt Nutzungsdaten zur Verwendung von Credentials (sensible Konfigurationsdaten) und stellt diese als Credential-Nutzungsereignis-Information CUE (credential usage event) dem erfindungsgemäßen Credential-Trust-Monitor D7 bereit. Eine Credential-Nutzungsereignis-Information CUE gibt insbesondere an, welches Credential verwendet wurde, vorzugsweise auch für welche Operation (z.B. encrypt, decrypt, sign, verify, keygen, key derivation), und/oder durch welche Anwenderfunktion AF oder durch welche Sicherheitsfunktion SF die Nutzung erfolgt ist. Die Information wird in einem Credential-Access-Recorder D71 des Credential-Trust-Monitors D7 festgehalten.

Wenn das Geräteintegritätsüberwachungssystem D6 und dessen Runtime Health Check D61 eine Verletzung der Geräteintegrität erkennt und den Resilience-Betriebsmodus aktiviert, stellt sie dem Credential-Trust-Monitor D7 ein Signal RM (Resilience Mode RM) bereit.

Die Credential-Vertrauensbewertungseinheit D72 (Credential Trust Determination D72) des Credential-Trust-Monitors D7 ermittelt:
- getriggert durch den Resilience Mode RM, und/oder
- abhängig von der durch den Credential-Access-Recorder D71 festgehaltenen Credential-Nutzungsinformation CUE,
eine Information zur Vertrauenswürdigkeit der Credentials CTI.

Optional wird die Credential-Trust-Information CTI der Trust-Anchor-Schnittstelle D4 bereitstellt, sodass davon abhängig die Trust-Anchor-Schnittstelle D4 den Zugriff auf Credentials bzw. die Nutzung von bestimmten abhängig von der zugeordneten Credential-Trust-Information CTI einschränkt. Dadurch wird verhindert, dass tatsächlich oder möglicherweise bei einem zurückliegend erfolgten Angriff kompromittierte Credentials weiterverwendet werden.

Optional wird die Credential-Trust-Information CTI außerdem oder alternativ der Geräte-Resilienzmanagement-Einheit D6 bereitgestellt, sodass diese davon abhängig erforderliche Recovery-Aktionen ermitteln D62 kann.

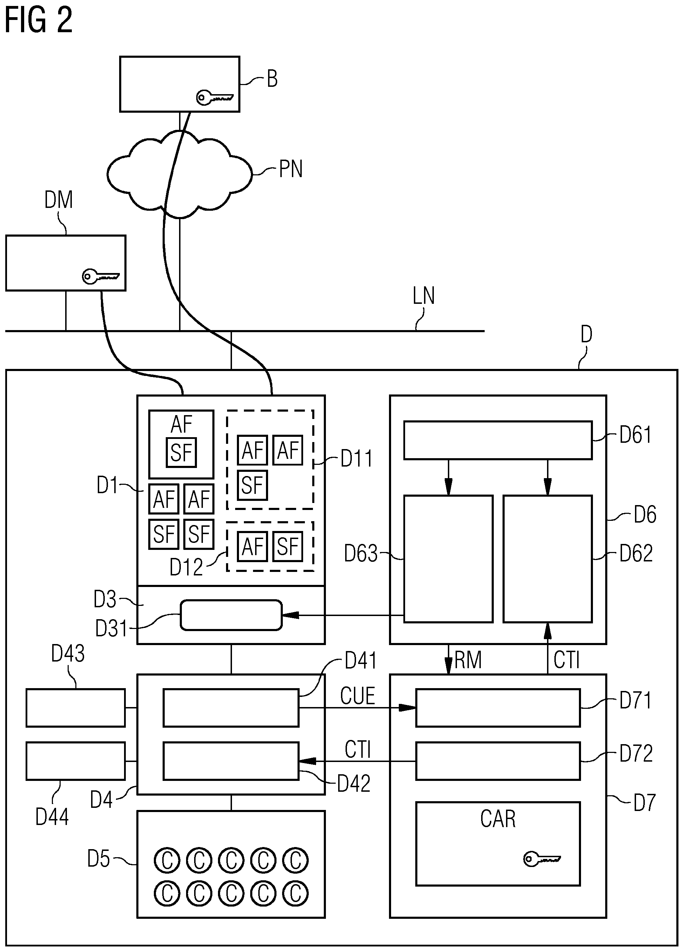

Bei der in Fig. 2 dargestellte Variante ist zusätzlich zu den in Fig. 1 dargestellten Komponenten eine Attestierungseinheit CAR (CAR Attestation Unit CAR, Credential Access Recorder CAR) vorgesehen, die eine kryptographisch geschützte Attestierung bilden kann, die Credential-Trust-Information CTI (und damit die vom Credential-Access-Recorder D71 erfasste Credential-Nutzungsereignis-Information CUE (direkt oder vorverarbeitet) des bei erkannter Verletzung der Geräteintegrität zurückliegenden Zeitfensters) bestätigt. Diese kann z.B. von einer Recovery-Funktionalität der Geräte-Resilienzmanagement-Einheit D6 ausgewertet werden, und/oder von dieser oder einer Applikationsfunktion AF oder Sicherheitsfunktion SF an ein externes System übertragen werden, z.B. an den Gerätemanager DM oder das Cloud-IoT-System B. Diese können diese Information dann, ähnlich wie die Geräte-Resilienzmanagement-Einheit D6, auswerten und davon abhängig Recovery-Aktionen zur Wiederherstellung des Geräts D ermitteln, oder dem Gerät D zugeordnete Gerätecredentials widerrufen, oder das Gerät D sperren oder dessen Zugriffsberechtigungen anpassen (einschränken).

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Ausführen einer Sicherheitsmaßnahme basierend auf einem Vertrauenswürdigkeitsstatus (CTI) eines Geräts (D),
mit den Schritten:
- Heranziehen einer Information (D6) zu einem sicherheitsrelevanten Ereignis auf dem Gerät (D),
- Heranziehen einer Information (CUE) zu einer vorangegangenen Verwendung von sensiblen Konfigurationsdaten (AF, SF, D5) auf dem Gerät (D),
- Ermitteln des Vertrauenswürdigkeitsstatus (CTI) aus der Information zu dem sicherheitsrelevanten Ereignisses (RM) in Kombination mit der Information (CUE) zu der vorangegangenen Verwendung der sensiblen Konfigurationsdaten (AF, SF, D5),
- Ableiten der Sicherheitsmaßnahme von dem Vertrauenswürdigkeitsstatus (CTI) und
- Ausführen der Sicherheitsmaßnahme.

2. Verfahren nach Anspruch 1,
wobei das sicherheitsrelevanten Ereignis:
- Eine Integritätsverletzung und/oder
- eine potenzielle Integritätsverletzung und/oder
- eine Manipulation und/oder
- ein zurückliegend erfolgter Angriff und/oder
- eine Kompromittierung
umfasst.

3. Verfahren nach einem der vorhergehenden Ansprüche, wobei die sensiblen Konfigurationsdaten (AF, SF, D5):
- einen privaten Schlüssel und/oder
- einen geheimen Schlüssel und/oder
- einen öffentlichen Schlüssel und/oder
- ein Credential und/oder
- ein verifiable Credential und/oder eine verifiable Presentation,
- einen kryptographischen Schlüssel und/oder
- ein Root-Zertifikat und/oder
- einen Referenz-Hash-Wert und/oder
- einen Wert für eine Integritätsprüfungen und/oder
- einen Firmware-Signatur-Prüfschlüssel (für einen Secure Boot und/oder ein Firmware-Update) und/oder
- ein Root-Zertifikat zur Validierung einer Firmware-Signatur (für einen Secure Boot und/oder ein Firmware-Update) und/oder
- einen kryptographischen Schlüssel zum Entschlüsseln einer Geräte-Firmware,
- einen kryptographischen Schlüssel zum Entschlüsseln oder zum Integritätsschutz von Konfigurationsdaten und/oder
- ein Root Certificate zur Authentisierung eines Kommunikationspartners und/oder
- ein initiales Gerätezertifikat und/oder
- einen Geräteauthentisierungsschlüssel für ein automatisiertes Provisionieren und/oder
- eine Passwort-Datenbank
umfassen.

4. Verfahren nach einem der vorhergehenden Ansprüche,
wobei das Gerät (D) basierend auf dem sicherheitsrelevanten Ereignis in einen eingeschränkten Betriebsmodus (RM) gesetzt wurde.

5. Verfahren nach einem der vorhergehenden Ansprüche,
wobei die vorangegangenen Verwendung (CUE) innerhalb eines definierten Zeitfensters stattgefunden hat.

6. Verfahren nach Anspruch 5,
wobei das definierte Zeitfenster einen geschätzten Zeitpunkt, zu welchem das sicherheitsrelevante Ereignis (D6) stattgefunden hat, enthält.

7. Verfahren nach Anspruch 4 und einem der Ansprüche 5 oder 6,
wobei das definierte Zeitfenster mit dem Zeitpunkt, zu dem der eingeschränkten Betriebsmodus (RM) aktiviert wurde, endet.

8. Verfahren nach einem Ansprüche 5 bis 7,
wobei das Zeitfenster:
- fest vorgegeben ist und/oder
- durch eine Nutzereigabe konfigurierbar ist und/oder
- abhängig von einer Art des sicherheitsrelevanten Ereignisses (D6) ermittelt wird.

9. Verfahren nach einem der vorhergehenden Ansprüche,
wobei die Sicherheitsmaßnahme umfasst:
- Ein Löschen der sensiblen Konfigurationsdaten (AF, SF, D5) und/oder
- ein Ersetzen der sensiblen Konfigurationsdaten (AF, SF, D5) durch sensible Ersatzkonfigurationsdaten.

10. Verfahren nach einem der vorhergehenden Ansprüche,
wobei die Sicherheitsmaßnahme in Abhängigkeit der Information (D6) zu der vorangegangenen Verwendung der sensiblen Konfigurationsdaten (AF, SF, D5) auf dem Gerät (D) ausgeführt wird.

11. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 10 ausgeführt werden, wenn das Computerprogramm auf der Recheneinheit ausgeführt wird.

12. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 10 ausgeführt werden, wenn das Computerprogramm auf der Recheneinheit ausgeführt wird.

13. Überwachungseinheit (D7) zum Überwachen einer Vertrauenswürdigkeit von sensiblen Konfigurationsdaten (AF, SF, D5) aufweisend:
- ein Computerprogrammprodukt nach Anspruch 11 und/oder
- ein computerlesbares Medium nach Anspruch 12.

14. Gerät (D) aufweisend:
- eine Überwachungseinheit (D7) nach Anspruch 13
und
- eine Geräte-Resilienzmanagement-Einheit (D6) und/oder
- eine Trust-Anchor-Schnittstelle (D4) und/oder
- eine Laufzeitumgebung (D1) und/oder
- einen Schlüsselspeicher (D5) und/oder
- eine Speichereinheit (D5) für kryptographische Funktionen.

15. System, aufweisend:
- ein Gerät (D) nach Anspruch 14
und
- ein Netzwerk (LN, PN) und/oder
- ein lokales Netzwerk (LN) und/oder
- eine öffentliches Netzwerk (PN) und/oder
- einen Geräteverwaltung (DM) und/oder
- ein Backend (B).
